# EUROPEAN PATENT SPECIFICATION

(11) **EP 4 026 709 B1**
(45) Date of publication and mention of the grant of the patent: **18.10.2023**
(21) Application number: 21214265.7
(22) Date of filing: 14.12.2021
(51) Int. Cl.: B60C 15/00, B29D 30/00, B60C 9/02, B60C 9/06, B60C 9/04, B60C 15/06

(54) **PNEUMATIC TIRE AND MANUFACTURING METHODS THEREFOR**
LUFTREIFEN UND HERSTELLUNGSVERFAHREN DAFÜR
PNEU ET PROCÉDÉS DE FABRICATION CORRESPONDANTS

(30) Priority: 06.01.2021 JP 2021001067
(43) Date of publication of application: 13.07.2022
(73) Proprietor: Sumitomo Rubber Industries, Ltd., Kobe-shi, Hyogo-ken 651-0072 (JP)
(72) Inventor: KAWABATA, Hiroshi, Kobe-shi, 651-0072 (JP)
(74) Representative: Manitz Finsterwald Patent- und Rechtsanwaltspartnerschaft mbB

(56) References cited:
- EP-A2- 0 953 462
- JP-A- H0 495 502
- JP-A- H08 175 105
- JP-A- H11 291 725

## Description

### BACKGROUND OF THE INVENTION

### FIELD OF THE INVENTION

The present invention relates to a pneumatic tire and a methods for manufacturing the same.

### BACKGROUND ART

Conventionally, there has been known a technique for improving running performance of a vehicle by using downforce based on the aerodynamic characteristics of the vehicle. In order to take advantage of such downforce, it is preferred that the tires exert high vertical spring rigidity, namely, stiffness in the tire radial direction.

Patent Document 1 below discloses a tire having a high vertical spring rigidity increased by a first carcass ply and a second carcass ply.
Patent Document 1: Japanese Patent Application Publication No. 2020-083053. JP H08 175105 A discloses a pneumatic tire comprising the features according to the preamble of claim 1.
JP H11 192 725 A discloses a pneumatic tire comprising features according to a related technology.
EP 0 953 462 A2 also discloses a pneumatic tire comprising features according to a related technology.
JP H04 95502 A also discloses a pneumatic tire comprising features according to a related technology.

### SUMMARY OF THE INVENTION

### PROBLEMS TO BE SOLVED BY THE INVENTION

In the conventional tires, the vertical spring rigidity is increased by increasing the tire inner pressure and increasing the rigidity of the carcass. According to such techniques, the flexibility of the tire at relatively light tire load becomes insufficient. As a result, the ground contact length and ground contact area of the tire are reduced, and thereby tire performance based on the ground contact are degraded.

The present invention was made in view of the above circumstances, and a primary objective of the present invention is to provide a pneumatic tire capable of exerting high vertical spring rigidity while ensuring the ground contact at light tire loads.

### MEANS FOR SOLVING THE PROBLEMS

This objective is achieved by a pneumatic tire comprising the features of claim 1 and a method comprising the features of claim 6 for manufacturing a pneumatic tire.

The pneumatic tire comprises a tread portion, a pair of sidewall portions, a pair of bead portions each with a bead core embedded therein, and a carcass extending between the bead portions and comprising first carcass cords and second carcass cords,
wherein
each of the first carcass cords comprises a main portion extending from the tread portion to the bead portions via the sidewall portions, and folded-back portions continued from the main portion and folded back around the bead cores from the inside to the outside in the tire axial direction,
each of the second carcass cords extends from the tread portion to the bead portions and terminates on the axially outside of the folded-back portions of the first carcass cords, and
the first carcass cords have a Young's modulus, and the second carcass cords have a Young's modulus larger than the Young's modulus of the first carcass cords.

### EFFECTS OF THE INVENTION

In the pneumatic tire according to the present invention, when a vertical load is applied to the pneumatic tire, compressive stress is generated in an axially inner part of each sidewall portion, and tensile stress is generated in an axially outer part of each sidewall portion.
Since the Young's modulus of the second carcass cords located on the axially outside is larger than the Young's modulus of the first carcass cords located on the axially inside, the vertical spring rigidity at heavy tire load is improved.
On the other hand, when the tire load is light, the tensile stress generated in the axially outer part of each sidewall portion is small, so the influence of the second carcass cords on the vertical spring rigidity is limited, and sufficient ground contact can be achieved.

### DESCRIPTION OF THE DRAWINGS

FIG. 1 is a meridian cross-sectional view of a pneumatic tire as an embodiment of the present invention.
FIG. 2 is an enlarged cross-sectional view showing the pneumatic tire of FIG. 1.
FIG. 3 is a cross-sectional view schematically showing the stress generated in the sidewall portion of the pneumatic tire to which the vertical load is applied.
FIG. 4 is a cross-sectional view of the sidewall portion provided with an insulation rubber layer.
FIG. 5 is a flowchart showing a method for manufacturing the pneumatic tire shown in FIG. 1.

### DETAILED DESCRIPTION OF THE INVENTION

Embodiments of the present invention will now be described in detail in conjunction with accompanying drawings.

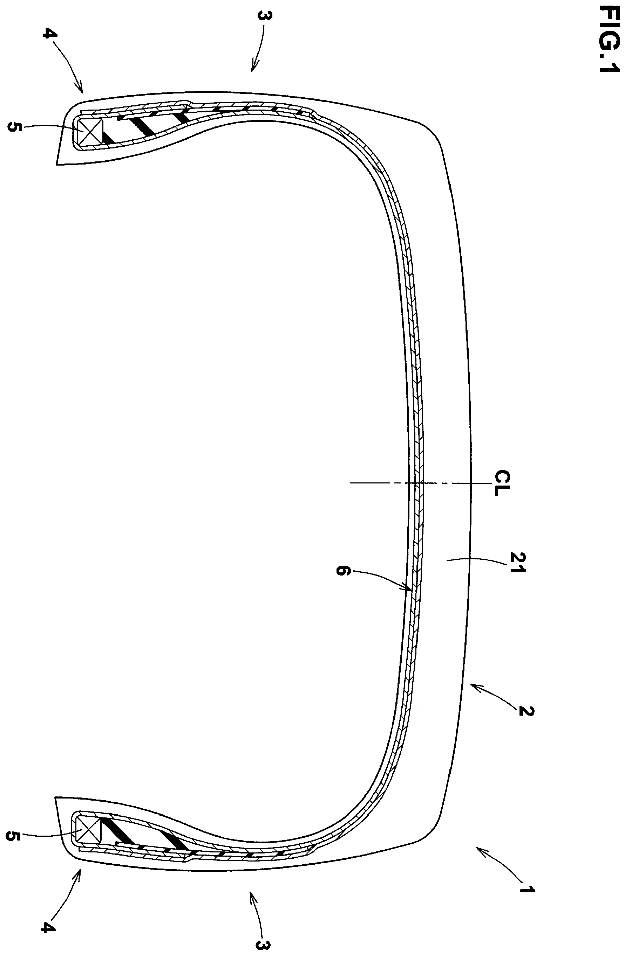

FIG. 1 is a meridian cross-sectional view including the tire rotational axis of a pneumatic tire 1 as an embodiment under its normal state.

The normal state of a tire is such a state that the tire is mounted on a standard wheel rim (not shown), inflated to a normal inner pressure, and loaded with no tire load.
In this application, dimensions and the like of various tire portions refer to values measured under the normal state unless otherwise noted.

The standard wheel rim is a wheel rim specified for the tire by a standard included in a standardization system on which the tire is based, for example, the "normal wheel rim" in JATMA, "Design Rim" in TRA, and "Measuring Rim" in ETRTO.

The normal inner pressure is air pressure specified for the tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

If there is no applicable standard such as racing tires, a wheel rim and air pressure recommended by the tire manufacturer are applied as the normal rim and the normal inner pressure, respectively.

The pneumatic tire 1 comprises a tread portion 2, a pair of sidewall portions 3, a pair of bead portions 4 each with a bead core 5 embedded therein, and a carcass 6 extending between the pair of bead portions 4.

The tread portion 2 is provided with a tread rubber 21 disposed radially outside the carcass 6.
Between the carcass 6 and the tread rubber 21, a belt for reinforcing the tread portion 2 may be provided.

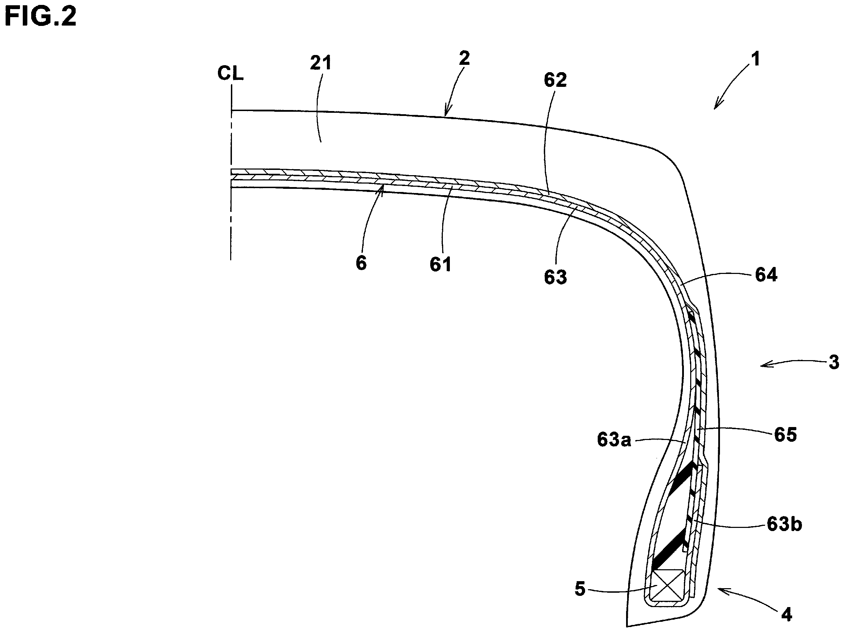

FIG. 2 shows the pneumatic tire 1 on one side with respect to the tire equator CL.

The carcass 6 comprises a first carcass ply 61 and a second carcass ply 62 disposed radially outside the first carcass ply 61.
On the inside of the first carcass ply 61, an inner liner made of a rubber compound having excellent air permeability may be provided.

The first carcass ply 61 is composed of first carcass cords 63 arranged along the tire radial direction and the tire axial direction and coated with a topping rubber.
The second carcass ply 62 is composed of second carcass cords 64 arranged along the tire radial direction and the tire axial direction and coated with a topping rubber.

The first carcass cord 63 comprises a main portion 63a and a pair of folded-back portions 63b continued from the main portion 63a.
The main portion 63a reaches the bead portions 4 from the tread portion 2 through the sidewall portions 3.
The folded-back portions 63b are folded back around the respective bead core 5 in the bead portions from the inside to the outside in the tire axial direction. The folded-back portions 63b terminate, for example, in the vicinity of the maximum tire width portion.

The second carcass cord 64 extends from the tread portion 2 through the sidewall portions 3, and reaches the bead portions 4 to terminate on the axially outside of the folded-back portions 63b of the first carcass cords 63.

The first carcass ply 61 is a so-called turnup ply, and the second carcass ply 62 is a so-called turn-down ply not turned up around the bead core.

The first carcass cords 63 have a Young's modulus E1, and the second carcass cords 64 have a Young's modulus E2.
The Young's modulus E2 is larger than the Young's modulus E1.

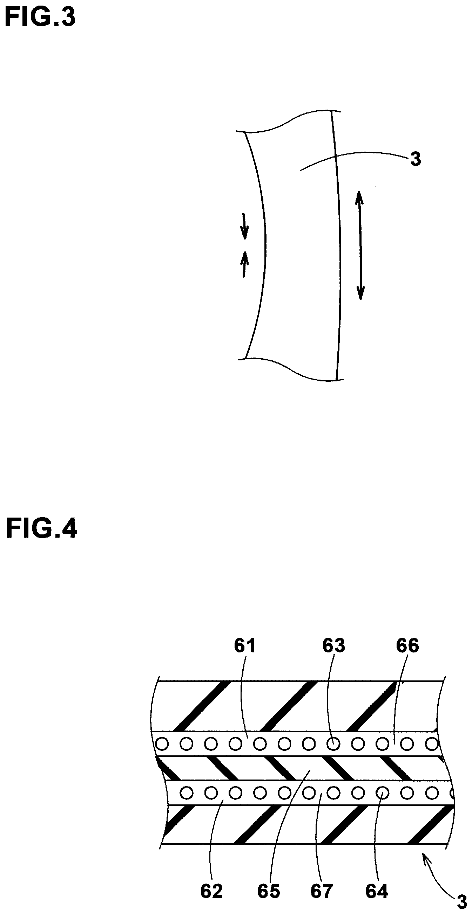

FIG. 3 schematically shows the stress generated in the sidewall portion 3 of the pneumatic tire 1 to which a vertical load is applied.
When a vertical load is applied to the pneumatic tire 1, each sidewall portion 3 is bent and deformed so that compressive stress is generated in an axially inner part of the sidewall portion 3, and tensile stress is generated in an axially outer part of the sidewall portion 3.

Since the Young's modulus E2 of the second carcass cords 64 located in the axially outer part of the sidewall portion 3 is larger than the Young's modulus E1 of the first carcass cords 63 located in the axially inner part of the sidewall portion 3, the vertical spring rigidity when the tire load is high is improved.

In the top category racing cars, the air flowing under the car is utilized in order to increase the vertical load on the tires and thereby to increase the grip force and improve the running performance.
When such a racing car is running at a high speed, a large downforce is generated.
If the distance between the road surface and the bottom panel of the car fluctuates, the downforce is also fluctuated, and thereby the running performance is deteriorated.
Further, if the posture of the car is changed due to the vehicle load fluctuation during acceleration and deceleration, then the downforce is changed between the front and rear of the car. This also deteriorates the running performance.

In the pneumatic tire 1 according to the present invention, high vertical spring rigidity can be obtained at heavy tire load. Therefore, the vehicle posture and distance between the road surface and the bottom panel of the car become stable during high speed running. As a result, the large downforce can be obtained stably to improve the running performance.

On the other hand, in a low speed range, for example, when running a hairpin curve, the downforce is significantly reduced, and thereby the tire load is significantly reduced. Therefore, the deflection deformation of the sidewall portions 3 is reduced, and the tensile stress generated in the outer part of the sidewall portion 3 becomes small. As a result, the effect of the second carcass cords having the larger Young's modulus E2 on the vertical spring rigidity of the pneumatic tire 1 is limited. Thus, in the pneumatic tire 1 according to the present invention, the sidewall portions 3 are flexibly bent even in a light tire load range to ensure sufficient ground contact, and the running performance of the vehicle can be effectively improved.
Further, even if the vertical tire load is reduced by acceleration/deceleration (namely, that of the front tire during acceleration, and that of the rear tire during deceleration), the change in the ground contact area and length of the tire is limited, and thereby, the deterioration of the running performance can be effectively prevented.

Preferably, the Young's modulus E2 of the second carcass cords 64 is not less than 1.5 times but not more than 2.5 times the Young's modulus E1 of the first carcass cords 63. As a result, sufficient bending deformation of the sidewall portions 3 can be secured, and good durability performance can be obtained.

In the pneumatic tire 1, as the Young's modulus E2 of the second carcass cords 64 is larger than the Young's modulus E 1 of the first carcass cords 63, a rigidity difference occurs therebetween.
Therefore, in the present embodiment, an insulation rubber layer 65 is disposed between the second carcass cords 64 and the main portions 63a of the first carcass cords 63 as shown in FIG. 2.
The insulation rubber layer 65 functions as a cushioning member between the main portions 63a of the first carcass cords 63 and the second carcass cords 64, and suppresses damage to the carcass 6 due to the rigidity difference.

FIG. 4 is a cross-sectional view of the sidewall portion 3 including the insulation rubber layer 65 taken along the tire circumferential direction. In the figure, the hatching showing the cross section of the first carcass cords 63 and the second carcass cords 64 is omitted.

The insulation rubber layer 65 is a different rubber compound from the first topping rubber 66 covering the first carcass cords 63 and the second topping rubber 67 covering the second carcass cords 64.

It is preferable that the radially outer end of the insulation rubber layer 65 is located radially outside the radially outer ends of the folded-back portions 63b as shown in FIG. 2. As a result, damage to the carcass 6 can be suppressed on the radially outside of the radially outer ends of the folded-back portions 63b (for example, in a buttress portion which is greatly deformed when a load is applied).

It is preferable that the radially inner end of the insulation rubber layer 65 is located radially inside the radially outer ends of the folded-back portions 63b.
As a result, in the vicinity of the radially outer ends of the folded-back portions 63b, damage to the carcass 6 is suppressed.

It is preferable that the insulation rubber layer 65 is disposed axially inside the folded-back portions 63b.
As a result, the folded-back portions 63b are located in an axially outer part of the bead portion 4, so the vertical rigidity of the bead portion 4 when applied by a heavy load, is improved.

The insulation rubber layer 65 may be omitted.

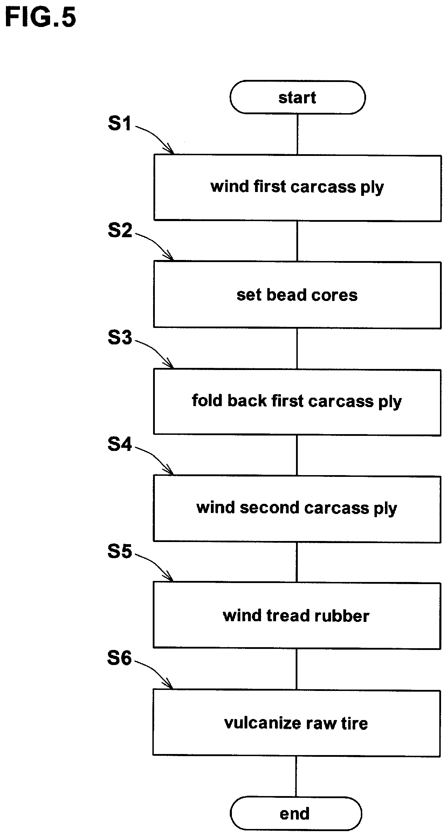

FIG. 5 is a flowchart showing the procedure of a manufacturing method 100 of the pneumatic tire 1.

The method 100 for manufacturing the pneumatic tire 1 comprises:
a first step S1 of winding the first carcass ply 61 into a cylindrical shape,
a second step S2 of setting the bead cores 5,
a third step S3 of folding back the folded-back portions 63b of the first carcass cords 63, and
a fourth step S4 of winding the second carcass ply 62.

In the first step S1, the first carcass ply 61 comprising the first carcass cords 63 is wound around, for example, a cylindrical outer peripheral surface of a tire building drum.

In the second step S2, the annular bead cores 5 are disposed on the radially outside of the cylindrically-wound first carcass ply 61.
The bead cores 5 are respectively disposed axially inside the axial outer ends of the first carcass ply 61.
As a result, in the first carcass cords 63, the axially outer portion than each bead core 5 becomes the folded-back portion 63b.

In the third step S3, the folded-back portions 63b in the first carcass ply 61 are folded toward the radially outside along the respective bead cores 5. The insulation rubber layer 65 is wound around the cylindrically-wound first carcass ply 61 before the third step S3 is performed.

In the fourth step S4, the second carcass ply 62 is wound around the radially outer side of the cylindrically-wound first carcass ply 61.
As described above, the second carcass cords 64 constituting the second carcass ply 62 have a higher Young's modulus than that of the first carcass cords 63 constituting the first carcass ply 61.

The manufacturing method 100 of the pneumatic tire 1 may comprise the following fifth and sixth steps.

The fifth step S5 is to wind the tread rubber 21 around the radially outer side of the second carcass ply 62. Thereby, the raw tire is formed.

The sixth step S6 is to vulcanization-mold the raw tire in a mold. In the sixth step S6, preferably, the tread rubber 21 is stretched by 2% to 4% in the tire circumferential direction. Thereby, interference between the tread rubber 21 and the mold during vulcanization-molding is suppressed, and deformation of the tread portion 2 is suppressed.

In the present embodiment, the first carcass cords 63 wound in the first step S1 have a smaller Young's modulus than the second carcass cords 64 wound in the fourth step S4, so the movement of the first topping rubber 66 and the inner liner rubber during vulcanization-molding is suppressed, and the occurrence of open threads is suppressed.

Usually, the innermost carcass cords are covered with a certain thickness of the inner liner rubber which forms the inner surface of the tire. However, there is a possibility that the thickness is reduced during vulcanization-molding the tire for various reasons so that the innermost carcass cords become almost exposed in the inner surface of the vulcanized tire. This phenomenon is called "open thread", and may adversely affect the tire durability.

While detailed description has been made of an embodiment of the present invention, the present invention can be embodied in various forms within the scope of the appended claims.

### Comparison tests

Based on the structure shown in FIG. 1, pneumatic tires of size 330/710R18 were experimentally manufactured as test tires (Comparative Example tires Ref. 1-Ref. 2 and Working example tires Ex. 1-Ex. 5).
The angle of the carcass cords of each test tire was 90 degrees with respect to the tire circumferential direction. Specifications of the test tires are shown in Table 1.

Each test tire was tested for various performances as follows.

### < Occurrence of Open thread >

For each test tire, a hundred samples were manufactured and visually checked whether the open thread phenomenon was occurred or not. The results are shown in Table 1.

### < Durability >

Using a drum-type tire testing machine, each test tire was tested for highspeed durability. The results are indicated in Table 1 by an index based on Comparative Example tire Ref.1 being 100, wherein the larger the value, the better the durability performance.

### < Ground contact length >

Each tire was measured for the static ground contact length at a light vertical tire load of 2 kN, and that at a heavy vertical tire load of 8 kN.

The results are indicated in Table 1 by an index based on Comparative Example tire Ref. 1 being 100.

### < Cornering Force >

Using a flat-belt-type tire testing machine, each test tire was measured for a cornering force at the light vertical tire load of 2 kN, and that at the heavy vertical tire load of 8 kN under the following test conditions: slip angle of 4 degrees, camber angle of 0 degree, and running speed of 60 km/h.

The results are indicated in Table 1 by an index based on Comparative Example tire Ref.1 being 100, wherein the larger the value, the better the cornering performance.

### < Dynamic rolling radius >

Using the flat-belt-type tire testing machine, each test tire was measured for the dynamic rolling radius at the light vertical tire load of 2 kN, and that at the heavy vertical tire load of 8 kN under the following test conditions: camber angle of 0 degree, and running speed of 60 km/h.

The results are indicated in Table 1 by an index based on Comparative

Example tire Ref. 1 being 100.

**Table 1**

| tire | | Ref. 1 | Ref.2 | Ex.1 | Ex.2 | Ex.3 | Ex.4 | Ex.5 |
|---|---|---|---|---|---|---|---|---|
| Young's modulus E1(N/sq.mm) | | 1335 | 2670 | 1335 | 1335 | 1335 | 1335 | 1335 |
| Young's modulus E2(N/sq.mm) | | 1335 | 2670 | 2003 | 2670 | 3338 | 4005 | 3338 |
| E2/E1 | | 1.0 | 1.0 | 1.5 | 2.0 | 2.5 | 3.0 | 2.5 |
| insulation rubber | | absent | absent | present | present | present | present | absent |
| open thread | | none | caused | none | none | none | none | none |
| durability | | 100.0 | 85.0 | 112.0 | 112.0 | 112.0 | 106.0 | 100.0 |
| ground contact length(%) | | | | | | | | |
| | light load | 100.0 | 96.0 | 100.0 | 100.0 | 100.0 | 100.0 | 100.0 |
| | heavy load | 100.0 | 96.0 | 98.0 | 96.0 | 95.0 | 94.0 | 95.0 |
| CF (%) | | | | | | | | |
| | light load | 100.0 | 98.0 | 100.0 | 100.0 | 100.0 | 100.0 | 100.0 |
| | heavy load | 100.0 | 102.0 | 101.0 | 101.5 | 102.0 | 103.0 | 102.0 |
| dynamic rolling radius(%) | | | | | | | | |
| | light load | 100.0 | 105.5 | 100.0 | 100.0 | 100.0 | 100.0 | 100.0 |
| | heavy load | 100.0 | 104.5 | 102.3 | 105.1 | 107.7 | 110.1 | 107.7 |
| variation | | 100.0 | 95.8 | 97.0 | 93.5 | 90.2 | 87.1 | 90.2 |

From the test results, it was confirmed that, in the working example tires, as compared with the comparative example tires, the variation of the dynamic rolling radius was reduced without deteriorating the cornering force at light tire loads as shown in Table 1.

### DESCRIPTION OF THE REFERENCE SIGNS

- 1: pneumatic tire
- 2: tread portion
- 3: sidewall portion
- 4: bead portion
- 5: bead core
- 6: carcass
- 21: tread rubber
- 61: first carcass ply
- 62: second carcass ply
- 63: first carcass cord
- 63a: main portion
- 63b: folded-back portion
- 64: second carcass cord
- 65: insulation rubber layer
- 100: manufacturing method
- E1: Young's modulus of first carcass cord
- E2: Young's modulus of second carcass cord
- S1: first step
- S2: second step
- S3: third step
- S4: fourth step
- S5: fifth step
- S6: sixth step

## Claims

1. A pneumatic tire (1) comprising a tread portion (2), a pair of sidewall portions (3), a pair of bead portions (4) each with a bead core (5) embedded therein, and a carcass (6) extending between the bead portions (4) and comprising first carcass cords (63) and second carcass cords (64), wherein
each of the first carcass cords (63) comprises a main portion (63a) extending from the tread portion (2) to the bead portions (4) via the sidewall portions (3), and folded-back portions (63b) continued from the main portion (63a) and folded back around the bead cores (5) from the inside to the outside in the tire axial direction,
each of the second carcass cords (64) extends from the tread portion (2) to the bead portions (4) and terminates on the axially outside of the folded-back portions (63b) of the first carcass cords (63),
the first carcass cords (63) have a Young's modulus,
the second carcass cords (64) have a Young's modulus larger than the Young's modulus of the first carcass cords (63), and
**characterized in that**
an insulation rubber layer (65) is disposed between the second carcass cords (64) and the main portions (63a) of the first carcass cords (63),
the insulation rubber layer (65) is a different rubber compound from a first topping rubber (66) covering the first carcass cords (63) and a second topping rubber (67) covering the second carcass cords (64).

2. The pneumatic tire (1) according to claim 1, wherein
the Young's modulus of the second carcass cords (64) is 1.5 to 2.5 times the Young's modulus of the first carcass cords (63).

3. The pneumatic tire (1) according to claim 1 or 2, wherein
the insulation rubber layer (65) has a radially outer end located on the radially outside of radially outer ends of the folded-back portions (63b).

4. The pneumatic tire (1) according to claim 3, wherein
the insulation rubber (65) layer has a radially inner end located on the radially inside of the radially outer ends of the folded-back portions (63b).

5. The pneumatic tire (1) according to claim 3, wherein
the insulation rubber layer (65) is disposed axially inside the folded-back portions (63b).

6. A method for manufacturing a pneumatic tire (1) comprising a tread portion (2), a pair of sidewall portions (3), a pair of bead portions (4) each with an annular bead core (5) embedded therein, and a carcass (6) extending between the bead portions (4), the method comprising:
a first step (S1) of winding a first carcass ply (61) comprising first carcass cords (63) into a cylindrical shape,
a second step (S2) of setting the annular bead cores (5) around the cylindrical-shape first carcass ply (61),
a third step (S3) of folding axially outer portions of the first carcass ply (61) around the respective bead cores (5), and
a fourth step (S4) of winding a second carcass ply (62) comprising second carcass cords (64) around the first carcass ply (61),
wherein
the first carcass cords (63) have a Young's modulus, and the second carcass cords (64) have a Young's modulus larger than the Young's modulus of the first carcass cords (63),
**characterized in that**
an insulation rubber layer (65) is wound around the cylindrically-wound first carcass ply (61) before the third step (S3) is performed such that the insulation rubber layer (65) is disposed between the second carcass cords (64) and main portions (63a) of the first carcass cords (63) extending from the tread portion (2) to the bead portions (4) via the sidewall portions (3), and
the insulation rubber layer (65) is a different rubber compound from a first topping rubber (66) covering the first carcass cords (63) and a second topping rubber (67) covering the second carcass cords (64).

7. The method for manufacturing a pneumatic tire (1) according to claim 6, which comprises:
a fifth (S5) step of winding a tread rubber (21) around the second carcass ply (62) to form a raw tire, and
a sixth step (S6) of vulcanization-molding the raw tire,
wherein
in the sixth step, the tread rubber (21) is stretched by 2% to 4% in the circumferential direction of the tire (1).

## Patentansprüche

1. Luftreifen (1), der einen Laufflächenabschnitt (2), ein Paar von Seitenwandabschnitten (3), ein Paar von Wulstabschnitten (4) jeweils mit einem darin eingebetteten Wulstkern (5) und eine Karkasse (6) umfasst, die sich zwischen den Wulstabschnitten (4) erstreckt und erste Karkassenkorde (63) sowie zweite Karkassenkorde (64) umfasst,
wobei
jeder der ersten Karkassenkorde (63) einen Hauptabschnitt (63a), der sich von dem Laufflächenabschnitt (2) über die Seitenwandabschnitte (3) zu den Wulstabschnitten (4) erstreckt, und zurückgeschlagene Abschnitte (63b) umfasst, die von dem Hauptabschnitt (63a) fortgesetzt sind und in der Reifenaxialrichtung um die Wulstkerne (5) herum von der Innenseite zu der Außenseite zurückgeschlagen sind,
sich jeder der zweiten Karkassenkorde (64) von dem Laufflächenabschnitt (2) zu den Wulstabschnitten (4) erstreckt und an einer axialen Außenseite der zurückgeschlagenen Abschnitte (63b) der ersten Karkassenkorde (63) endet,
die ersten Karkassenkorde (63) einen Youngschen Modul aufweisen, die zweiten Karkassenkorde (64) einen Youngschen Modul aufweisen, der größer als der Youngsche Modul der ersten Karkassenkorde (63) ist und
**dadurch gekennzeichnet, dass**
eine Isolationsgummischicht (65) zwischen den zweiten Karkassenkorden (64) und den Hauptabschnitten (63a) der ersten Karkassenkorde (63) angeordnet ist,
die Isolationsgummischicht (65) bezüglich eines ersten Deckgummis (66), das die ersten Karkassenkorde (63) abdeckt, und eines zweiten Deckgummis (67), das die zweiten Karakassenkorde (64) abdeckt, eine andersartige Gummizusammensetzung ist.

2. Luftreifen (1) nach Anspruch 1, wobei
der Youngsche Modul der zweiten Karkassenkorde (64) das 1,5- bis 2,5-fache des Youngschen Moduls der ersten Karkassenkorde (63) ist.

3. Luftreifen (1) nach Anspruch 1 oder 2, wobei
die Isolationsgummischicht (65) ein radial äußeres Ende aufweist, das an der radialen Außenseite radial äußerer Enden der zurückgeschlagenen Abschnitte (63b) angeordnet ist.

4. Luftreifen (1) nach Anspruch 3, wobei
die Isolationsgummischicht (65) ein radial inneres Ende aufweist, das auf der radialen Innenseite der radial äußeren Enden der zurückgeschlagenen Abschnitte (63b) angeordnet ist.

5. Luftreifen (1) nach Anspruch 3, wobei
die Isolationsgummischicht (65) axial innerhalb der zurückgeschlagenen Abschnitte (63b) angeordnet ist.

6. Verfahren zum Herstellen eines Luftreifens (1), der einen Laufflächenabschnitt (2), ein Paar von Seitenwandabschnitten (3), ein Paar von Wulstabschnitten (4) jeweils mit einem darin eingebetteten ringförmigen Wulstkern (5) und eine Karkasse (6) umfasst, die sich zwischen den Wulstabschnitten (4) erstreckt, wobei das Verfahren umfasst:
einen ersten Schritt (S1) des Windens einer ersten Karkassenlage (61), die erste Karkassenkorde (63) umfasst, in eine zylindrische Form, einen zweiten Schritt (S2) des Legens der ringförmigen Wulstkerne (5) um die zylinderförmige erste Karkassenlage (61) herum,
einen dritten Schritt (S3) des Umschlagens axial äußerer Abschnitte der ersten Karkassenlage (61) um die jeweiligen Wulstkerne (5) herum und
einen vierten Schritt (S4) des Windens einer zweiten Karkassenlage (62), die zweite Karkassenkorde (64) umfasst, um die erste Karkassenlage (61) herum,
wobei
die ersten Karkassenkorde (63) einen Youngschen Modul aufweisen und die zweiten Karkassenkorde (64) einen Youngschen Modul aufweisen, der größer als der Youngsche Modul der ersten Karkassenkorde (63) ist, **dadurch gekennzeichnet, dass**
eine Isolationsgummischicht (65) um die zylindrisch gewundene erste Karkassenlage (61) herum gewunden wird, bevor der dritte Schritt (S3) ausgeführt wird, sodass die Isolationsgummischicht (65) zwischen den zweiten Karkassenkorden (64) und Hauptabschnitten (63a) der ersten Karkassenkorde (63), die sich von dem Laufflächenabschnitt (2) über die Seitenwandabschnitte (3) zu den Wulstabschnitten (4) erstrecken, angeordnet wird und
die Isolationsgummischicht (65) bezüglich eines ersten Deckgummis (66), dass die ersten Karkassenkorde (63) abdeckt, und eines zweiten Deckgummis (67), das die zweiten Karkassenkorde (64) abdeckt, eine andersartige Gummizusammensetzung ist.

7. Verfahren zum Herstellen eines Luftreifens (1) nach Anspruch 6, welches umfasst:
einen fünften Schritt (S5) des Windens eines Laufflächengummis (21) um die zweite Karkassenlage (62) herum, um einen Rohreifen zu bilden, und
einen sechsten Schritt (S6) des Vulkanisierungsformens des Rohreifens,
wobei
das Laufflächengummi (21) in dem sechsten Schritt um 2% bis 4% in der Umfangsrichtung des Reifens (1) gedehnt wird.

## Revendications

1. Bandage pneumatique (1) comprenant une portion formant bande de roulement (2), une paire de portions formant parois latérales (3), une paire de portions de talon (4) chacune avec une âme de talon (5) noyée à l'intérieur de celle-ci, et une carcasse (6) s'étendant entre les portions de talon (4) et comprenant des premiers câblés de carcasse (63) et des seconds câblés de carcasse (64), dans lequel
chacun des premiers câblés de carcasse (63) comprend une portion principale (63a) s'étendant depuis la portion formant bande de roulement (2) jusqu'aux portions de talon (4) via les portions formant parois latérales (3), et des portions repliées vers l'arrière (63b) en prolongement de la portion principale (63a) et repliées à l'arrière autour des âmes de talon (5) depuis l'intérieur vers l'extérieur dans la direction axiale du pneumatique,
chacun des seconds câblés de carcasse (64) s'étend depuis la portion formant bande de roulement (2) jusqu'aux portions de talon (4) et se termine sur la partie axialement extérieure des portions repliées vers l'arrière (63b) des premiers câblés de carcasse (63),
les premiers câblés de carcasse (63) un module de Young,
les seconds câblés de carcasse (64) ont un module de Young plus grand que le module de Young des premiers câblés de carcasse (63), et **caractérisé en ce que**
une couche en caoutchouc d'isolation (65) est disposée entre les seconds câblés de carcasse (64) et les portions principales (63a) des premiers câblés de carcasse (63),
la couche en caoutchouc d'isolation (65) est un composé de caoutchouc différent d'un premier caoutchouc d'enrobage (66) couvrant les premiers câblés de carcasse (63) et d'un second caoutchouc d'enrobage (67) couvrant les seconds câblés de carcasse (64).

2. Bandage pneumatique (1) selon la revendication 1, dans lequel le module de Young des seconds câblés de carcasse (64) est de 1,5 à 2,5 fois le module de Young des premiers câblés de carcasse (63).

3. Bandage pneumatique (1) selon la revendication 1 ou 2, dans lequel la couche en caoutchouc d'isolation (65) a une extrémité radialement extérieure située sur la partie radialement extérieure d'extrémités radialement extérieures des portions repliées vers l'arrière (63b).

4. Bandage pneumatique (1) selon la revendication 3, dans lequel la couche en caoutchouc d'isolation (65) a une extrémité radialement intérieure située sur la partie radialement intérieure d'extrémités radialement extérieures des portions repliées vers l'arrière (63b).

5. Bandage pneumatique (1) selon la revendication 3, dans lequel la couche en caoutchouc d'isolation (65) est disposée axialement à l'intérieur des portions repliées vers l'arrière (63b).

6. Procédé de fabrication d'un bandage pneumatique (1) comprenant une portion formant bande de roulement (2), une paire de portions formant parois latérales (3), une paire de portions de talon (4) ayant chacune une âme de talon annulaire (5) noyée à l'intérieur de celle-ci, et une carcasse (6) s'étendant entre les portions de talon (4), le procédé comprenant :
une première étape (S1) consistant à enrouler une première nappe de carcasse (61) comprenant des premiers câblés de carcasse (63) dans une forme cylindrique,
une deuxième étape (S2) consistant à placer les âmes de talon annulaires (5) autour de la première nappe de carcasse de forme cylindrique (61),
une troisième étape (S3) consistant à plier des portions axialement extérieures de la première nappe de carcasse (61) autour de l'âme de talon (5) respective, et
une quatrième étape (S4) consistant à enrouler une seconde nappe de carcasse (62) comprenant des seconds câblés de carcasse (64) autour de la première nappe de carcasse (61),
dans lequel
les premiers câblés de carcasse (63) un module de Young, et les seconds câblés de carcasse (64) ont un module de Young plus grand que le module de Young des premiers câblés de carcasse (63),
**caractérisé en ce que**
une couche en caoutchouc d'isolation (65) est enroulée autour de la première nappe de carcasse enroulée de manière cylindrique (61) avant exécution de la troisième étape (S3) de telle sorte que la couche en caoutchouc d'isolation (65) est disposée entre les seconds câblés de carcasse (64) et les portions principales (63a) des premiers câblés de carcasse (63) s'étendant depuis la portion formant bande de roulement (2) jusqu'aux portions de talon (4) via les portions formant parois latérales (3), et
la couche en caoutchouc d'isolation (65) est un composé de caoutchouc différent d'un premier caoutchouc d'enrobage (66) couvrant les premiers câblés de carcasse (63) et d'un second caoutchouc d'enrobage (67) couvrant les seconds câblés de carcasse (64).

7. Procédé de fabrication d'un bandage pneumatique (1) selon la revendication 6, qui comprend :
une cinquième étape (S5) consistant à enrouler un caoutchouc de bande de roulement (21) autour de la seconde nappe de carcasse (62) pour former un pneumatique cru, et
une sixième étape (S6) consistant à mouler par vulcanisation le pneumatique cru,
dans lequel
dans la sixième étape, le caoutchouc de bande de roulement (21) est étiré à raison de 2 % à 4 % dans la direction circonférentielle du pneumatique (1).
